**Europäisches Patentamt**

**European Patent Office**

**Office européen des brevets**

(11) Veröffentlichungsnummer : **0 342 661 B1**

(19)

(12) **EUROPÄISCHE PATENTSCHRIFT**

(45) Veröffentlichungstag der Patentschrift :
**26.08.92 Patentblatt 92/35**

(21) Anmeldenummer : **89108910.4**

(22) Anmeldetag : **18.05.89**

(51) Int. Cl.⁵ : **B32B 18/00,** B32B 1/08,
B32B 15/18, B32B 15/20,
B22D 19/00, C23C 4/06,
C23C 6/00, F16L 59/14

(54) **Wärmedämmformkörper auf der Basis von verpresstem, mikroporösem Wärmedämmstoff mit einer Umhüllung auf der Basis von Metallen.**

(30) Priorität : **18.05.88 DE 3816979**

(43) Veröffentlichungstag der Anmeldung :
**23.11.89 Patentblatt 89/47**

(45) Bekanntmachung des Hinweises auf die
Patenterteilung :
**26.08.92 Patentblatt 92/35**

(84) Benannte Vertragsstaaten :
**AT BE DE ES FR GB IT NL SE**

(56) Entgegenhaltungen :
**EP-A- 0 059 860**
**EP-A- 0 205 155**
**EP-A- 0 315 169**
**DE-A- 3 418 637**
**DE-A- 3 530 924**

(73) Patentinhaber : **WACKER-CHEMIE GMBH**
**Hanns-Seidel-Platz 4**
**W-8000 München 83 (DE)**

(72) Erfinder : **Reisacher, Johannes, Dipl.-Ing. (FH)**
**Sailerstrasse 16**
**W-8960 Kempten (DE)**
Erfinder : **Bleeck, Ulrich, Dr. Dipl.-Ing.**
**Alte Landstrasse 30**
**W-8968 Durach (DE)**
Erfinder : **Kratel, Günter, Dr. Dipl.-Chem.**
**Alpenblickstrasse 10**
**W-8968 Durach-Bechen (DE)**

EP 0 342 661 B1

**Beschreibung**

Die Erfindung betrifft Wärmedämmformkörper auf der Basis von verpreßtem, mikroporösem Wärmedämmstoff mit einer Umhüllung auf der Basis von Metallen.

Für viele Anwendungszwecke müssen Wärmedämmstoffe auf der Basis von verpreßtem, mikroporösem Wärmedämmstoff zumindest auf der kalten Seite mit einem Schutz gegen mechanische Beanspruchungen, wie Schwingungen, Vibrationen, Stöße oder Schläge versehen werden, da die Wärmedämmstoffe selbst geringe Festigkeit aufweisen.

Wärmedämmformkörper der in Rede stehenden Art mit Umhüllungen auf der Basis von Metallen sind aus der EP-A-59860 bzw. der entsprechenden US-A-4447345 und der EP-A-205155 bekannt, wo Wärmedämmstoffe mit gestanzten, gezogenen oder andersartig geformten Metallblechen als Umhüllungen versehen werden. Dabei bestehen immer die Schwierigkeiten, daß die Umhüllung nicht so stark ausgebildet werden kann, daß ein optimaler Schutz der Wärmedämmformkörper gewährleistet ist, die Formgebung nicht im gewünschten Umfang durchführbar ist oder die Metallumhüllung nicht derart gestaltet werden kann, daß die Hohlräume zwischen der Umhüllung und dem Wärmedämmstoff im Sinne einer optimalen Wärmedämmung minimiert sind.

Aufgabe der Erfindung ist es, Wärmedämmformkörper auf der Basis von mikroporösem, verpreßtem Wärmedämmstoff mit einer zumindest einseitigen Umhüllung auf der Basis von Metallen zu schaffen, die einen optimaler Schutz des Wärmedämmstoffes gegen mechanische Beanspruchungen gewährleistet und die Hohlräume zwischen der Umhüllung und dem Wärmedämmstoff im Sinne einer optimalen Wärmedämmung minimiert.

Gegenstand der Erfindung sind Wärmedämmformkörper auf der Basis von mikroporösem, verpreßtem Wärmedämmstoff mit einer zumindest einseitigen Umhüllung auf der Basis von Metallen erhältlich durch Aufbringen von Metallen oder Metallegierungen in flüssigem Zustand auf einen Grundkörper auf Basis von mikroporösem, verpreßtem Wärmedämmstoff.

Überraschenderweise ist es möglich mikroporöse, verpreßte Wärmedämmstoffe beim Gießvorgang mit flüssigen Metallen zu übergießen und nach der Erstarrung eine feste metallische Umhüllung zu erhalten. Auch die Form des Wärmedämmformkörpers bleibt während des Gießvorganges erhalten, d.h. es finden keine Verdichtungen statt.

Da das Metall den Grundkörper in flüssiger Form umhüllt und dann erst aushärtet, gibt es keine Einschränkungen in der Dicke und auch in der Formgebung der Umhüllung. Dadurch eröffnet sich ein großes Spektrum von Anwendungen in Motoren, Aggregaten und Rohrisolationen, wie sie entsprechend dem Stand der Technik noch nicht möglich waren. Des weiteren werden durch die Einbettung des Wärmedämmformkörpers in das flüssige Metall die Hohlräume zwischen der Umhüllung und dem Wärmedämmstoff minimiert.

Die erfindungsgemäßen Wärmedämmformkörper können unregelmäßige und/oder unterschiedliche geometrische Formen darstellen, wobei gleichbleibende physikalische Eigenschaften über den ganzen Körper gewährleistet sind. Die erfindungsgemäßen Wärmedämmformkörper sind zumindest auf einer Seite, zumeist auf der kalten Seite des Wärmedämmformkörpers, durch Metall umgeben, das in flüssigem Zustand aufgebracht wurde. Je nach Anwendungsfall kann der Wärmedämmformkörper auch allseitig durch Metall umgossen sein. Der durch den erfindungsgemäßen Wärmedämmformkörper zu dämmende Gegenstand kann schon vor dem Gießvorgang mit dem wärmedämmenden Grundkörper versehen werden, wobei dann nur noch die freien Seiten des Wärmedämmstoffes umgossen werden. Er kann aber auch mit vorgefertigten erfindungsgemäßen Wärmedämmformkörpern versehen werden, wobei der Formkörper allseitig umgossen sein kann, zumeist bleiben jedoch die dem zu dämmenden Gegenstand hin gerichteten Seiten frei.

Als mikroporöser Wärmedämmstoff werden verpreßte, feinteilige Metalloxide eingesetzt. Folgende typische Zusammensetzungen für Wärmedämmaterial haben sich bewährt:

| 30 - 100 Gew.-% | feinteiliges Metalloxid |
| 0 - 50 Gew.-% | Trübungsmittel |
| 0 - 50 Gew.-% | Fasermaterial |
| 0 - 15 Gew.-% | anorganisches Bindermaterial, wobei die Summe der vier Komponenten inner 100 Gew.-% ergeben muß. |

Bevorzugte Zusammensetzungen enthalten:

| 30 - 89 Gew.-% | feinteiliges Metalloxid |
| 10 - 50 Gew.-% | Trübungsmittel |
| 1 - 50 Gew.-% | Fasermaterial |
| 0 - 5 Gew.-% | anorganisches Bindermaterial. |

Besonders gute Ergebnisse werden mit folgenden Zusammensetzungen erreicht:

| 50 - 89 Gew.-% | feinteiliges Metalloxid |
| 20 - 40 Gew.-% | Trübungsmittel |

5 - 20 Gew.-%        Fasermaterial
0,5 - 2 Gew.-%        anorganisches Bindematerial.

Beispiele für feinteiliges Metalloxid sind pyrogen erzeugte Kieselsäuren, einschließlich Lichtbogenkieselsäuren, alkaliarme Fällungskieselsäuren, analog hergestelltes Aluminiumoxid, Titanoxid und Zirkonoxid, sowie deren Mischungen. Vorzugsweise werden pyrogen erzeugte Kieselsäure, Aluminiumoxid oder deren Mischung verwendet. Die feinteiligen Metalloxide weisen spezifische Oberflächen von vorzugsweise 50 - 700 $m^2$/g, insbesondere 70 - 400 $m^2$/g, auf.

Beispiele für Trübungsmittel sind Ilmenit, Titandioxid, Siliciumcarbid, Eisen-II-Eisen-III-Mischoxid, Chromdioxid, Zirkonoxid, Mangandioxid, Eisenoxid, Siliciumdioxid, Aluminiumoxid und Zirkonsilikat, sowie deren Mischungen. Vorzugsweise werden Ilmenit und Zirkonsilikat verwendet. Die Trübungsmittel weisen vorteilhafterweise ein Absorptionsmaximum im Infrarotbereich zwischen 1,5 und 10 μ m auf.

Beispiele für Fasermaterial sind Glaswolle, Steinwolle, Basaltwolle, Schlackenwolle, keramische Fasern, wie sie aus Schmelzen von Aluminium- und/oder Siliciumoxid gewonnen werden, und Asbestfasern, sowie deren Mischungen. Vorzugsweise werden Fasern, gewonnen aus der Schmelze von Aluminium- und/oder Siliciumoxid, verwendet.

Als anorganische Bindemittel können alle Bindemittel, deren Einsatz in mikroporösen, verpreßten Wärmedämmstoffen bekannt ist, verwendet werden. Beispiele solcher Bindemittel sind beispielsweise in der EP-A-29227 offenbart. Vorzugsweise werden Boride des Aluminiums, des Titans, des Zirkons, des Calciums, Silicide, wie Calciumsilicid und Calcium-Aluminium-Silicid, insbesondere Borcarbid eingesetzt. Beispiele für weitere Bestandteile sind basische Oxide, insbesondere Magnesiumoxid, Calciumoxid oder Bariumoxid.

Die verwendeten Metalle oder Metallegierungen weisen einen Schmelzpunkt von vorzugsweise 300 bis 1500 °C, insbesondere 500 bis 1200 °C, auf.

Beispiele für Metalle bzw. deren Legierungen sind Aluminium, sowie dessen Legierungen mit Magnesium, Silicium, Kupfer, Mangan und Nickel; Kupfer, sowie dessen Legierungen mit Zink, Blei, Silicium, Eisen und Nickel, oder Eisen, sowie dessen Legierungen mit Mangan und Silicium, die einen Kohlenstoffgehalt von 2-4% und einen kontrollierten Phosphorund Schwefelgehalt aufweisen. Die genannten Eisenlegierungen sind dem Fachmann unter den Begriffen Temperguß, Gußeisen mit Lamellengraphit und Gußeisen mit Kugelgraphit bekannt. Beispiele für Aluminiumlegierungen sind Silumin Al-Si, eine Aluminium-Siliciumlegierung mit bis 14 Gew.-% Silicium, Silumin Al-Mg-Si, eine Aluminium-Magnesium-Siliciumlegierung mit bis zu 1 Gew.-% Mg und bis zu 14 Gew.-% Si, Alulegierung Al-Mg, eine Aluminium-Magnesiumlegierung mit bis zu 5 Gew.-% Mg und 0,2 Gew.-% Si sowie 0,7-0,5 Gew.-% Mangan, Alulegierung Al-Cu, eine Aluminium-Kupferlegierung mit 6-14 Gew.-% Cu und Alulegierung Al-Ni-Cu-Mg, eine Aluminium-Nickel-Kupfer-Magnesiumlegierung mit 4-5 Gew.-% Cu, 1-2 Gew.-% Magnesium und 1,5-2,5 Gew.-% Nickel. Weitere Beispiele für Metalle bzw. deren Legierungen sind eisenhaltige Stahlgußlegierungen mit einem Kohlenstoffgehalt kleiner als 2 Gew.-% mit unterschiedlichen Anteilen von dem Fachmann bekannten Legierungselementen wie Mangan, Silicium, Nickel, Chrom, Molybdän, Vanadium und Titan, sowie Letternlegierungen wie Bleilegierungen mit bis zu 30 Gew.-% Antimon und 5 Gew.-% Zinn oder die unter dem Begriff Wood'sches Metall bekannte Legierung mit 25 Gew.-% Blei, 30 Gew.-% Wismut, 12,5 Gew.-% Zinn und 12,5 Gew.-% Cadmium.

Typisch für Letternlegierungen ist ein niedriger Schmelzpunkt, gute Fließfähigkeit, hohe Festigkeit, insbesondere Abriebfestigkeit sowie die Eigenschaft, daß ihre Dichte beim Erstarren zunimmt, was zu einem besonders guten Formfüllungsverhalten führt.

Die Auswahl der bevorzugt verwendeten Metalle bzw. deren Legierungen richtet sich nach den jeweiligen Anwendungsfall, steht die Verschleißfestigkeit im Vordergrund wählt man vorzugsweise eisenhaltige Legierungen, für niedrig schmelzende Legierungen Letternlegierungen und für hohe Fließfähigkeit Aluminium- oder Letternlegierungen.

Zur Herstellung der erfindungsgemäßen Wärmedämmformkörper werden zunächst die Grundkörper auf Basis von mikroporösem, verpreßtem Wärmedämmstoff nach an sich bekannten Methoden vorgefertigt. Vorzugsweise umfaßt die Fertigung folgende Verfahrensschritte:

a) Vorverdichten der Wärmedämmischung auf Basis von feinverteiltem Metalloxid bei Drücken von 1 bis 5 bar, insbesondere 2 bar oder ungefähr 2 bar;

b) Verpressen des vorverdichteten Materials bei Enddrücken von 8 bis 20 bar und

c) gegebenenfalls Erhitzen des verpreßten Körpers bei Temperaturen von 500 bis 900 °C.

Beim Vorverdichten bzw. Verpressen sollen die in der Schüttung eingeschlossenen Gase entweichen können. Daher erfolgt das Verdichten und Verpressen vorzugsweise unter Anlegen von Unterdruck. Das Entgasen kann auch schon vor dem Verdichten bzw. Verpressen erfolgen.

Der vorgefertigte Grundkörper kann gegebenenfalls in an sich bekannter Weise zumindest einseitig mit einer Kaschierung versehen werden, um die Flexibilität des Grundkörpers zu erhöhen. Als Kaschierung kommen grundsätzlich alle Materialien in Frage, mit denen bereits bisher Wärmedämmformkörper der erfindungs-

EP 0 342 661 B1

gemäßen Art kaschiert werden konnten. Es sind dies vorzugsweise Vliese oder Gewebe aus Aluminiumsilicat, Glasfaser, Steinwolle, Cellulose, insbesondere Metallfolien wie Aluminiumfolie, Edelstahlfolie und andere. Die Verbindung zwischen Kaschierungsmaterial und verpreßtem Wärmedämmaterial kann klebend oder nicht-klebend sein. Bei Materialien wie Glasfaser und dergleichen erfolgt bereits durch Anlegen von Druck und ohne Verwendung eines Klebers eine ausreichende mechanische Verzahnung des Wärmedämmaterials mit dem Kaschierungsmaterial, insbesondere, wenn das Kaschiermaterial mit der losen Schüttung des Wärmedämmaterials oder mit vorverdichtetem Wärmedämmaterial bei den oben genannten Enddrücken verpreßt wird. Es können jedoch auch anorganische Kleber, wie z.B. Kieselsole oder Wasserglas verwendet werden oder bekannte organische Kleber.

Auch Wärmedämmformkörper mit Umhüllung gemäß der älteren Patentanmeldung EP-A- 0 315 169 (Priorität: 05.11.87 DE 3737459; Veröffenttichungstag: 10.05.89) können verwendet werden. Dort werden Wärmedämmformkörper mit Umühllung beschrieben, die dadurch gekennzeichnet sind, daß ein Formling aus einem mit einer tiefziehfähigen Umhüllung versehenen Grundkörper auf Basis von verpreßtem, mikroporösem Wärmedämmstoff, wobei der Druck innerhalb der Umhüllung auf bis zu $10^{-6}$ bar vermindert ist, bei Drücken im Bereich von 1 t/m$^2$ bis 1000 t/m$^2$ geprägt wird. Da innerhalb der Umhüllung immer ein Unterdruck herrscht, müssen die dort verwendeten Umhüllungen gasdicht sein und den Grundkörper vollständig einschließen. Weiterhin werden dort nur Umhüllungen verwendet die tiefziehfähig sind, d.h., bei denen während des Verformungsvorgangs keine Materialtrennung durch Abnahme des Durchmessers auftritt. All diese Eigenschaften sind bei Umhüllungen, die in flüssigem Zustand aufgebracht wurden nicht erfüllt, wodurch sich der Gegenstand der vorliegenden Erfindung hiervon wesentlich unterscheidet. Als Beispiele der dort offenbarten Umhüllungen seien Verbundfolien mit Schichtfolgen aus Polyamid/Aluminium/Polyethylen, Polypropylen/Aluminium/Polypropylen oder Polypropylen/Aluminium/Polyamid genannt. Der Unterdruck innerhalb der Umhüllung kann durch konventionelles Evakuieren mit einer Vakuumpumpe und anschließendem luftdichtem Verschließen der Umhüllung erfolgen. Die nachfolgende Prägung zu Formkörpern unterschiedlichster Ausgestaltungen erfolgt mit an sich bekannten Pressen.

Auf diese vorabbeschriebenen Grundkörper auf Basis von verpreßtem, mikroporösem Wärmedämmstoff werden bei einem Verfahren zur Herstellung der erfindungsgemäßen Wärmedämmformkörper zumindest einseitig Metalle oder Metallegierungen in flüssigem Zustand aufgebracht, wobei vorzugsweise der Grundkörper mit einer Kokille umgeben wird und der Abstand zwischen Kokilleninnenwand und Grundkörper der zu erzielenden Stärke der Metallumhüllung entspricht. Das Einbringen der Flüssigkeit in die Gießform (Kokille) kann durch einfaches Eingießen, aber auch unter Druck (Druckgießen), erfolgen.

Als Kokillenmaterial können vorzugsweise Formsande, insbesondere für das Gießen mit Kern, Metalle oder gekühlte Leichtmetalle, die üblicherweise mit Wasser gekühlt werden, verwendet werden. Als besonders vorteilhaft haben sich Verfahren erwiesen, bei denen metallische Dauerkokillen eingesetzt werden.

Die erfindungsgemäßen Wärmedämmformteile finden überall dort Verwendung wo es nötig ist, thermisch beanspruchte Teile wirkungsvoll zu isolieren, insbesondere dann, wenn die Temperatur und Platzverhältnisse einen hochdämmenden thermischen Isolator zwingend erforderlich machen. Einsatzmöglichkeiten der erfindungsgemäßen Wärmedämmformkörper sind im Kraftfahrzeugbereich beispielsweise die Dämmung von Abgaskrümmern, Vorrohren, sowie spezielle Hitzeschilder und Motorisolationen im Bereich Zylinder und Port-liner. Weitere Bereiche, in denen der erfindungsgemäße Wärmedämmformkörper eingesetzt werden kann, sind die Luftfahrt, die Meß- und Regeltechnik, die Wehrtechnik und der Anlagenbau.

Beispiel 1:

Ein Stahlrohr mit einem Außendurchmesser von 47 mm, einer Wanddicke von 2 mm und einer Höhe von 200 mm wurde mit einer 5 mm dicken, verpreßten, mikroporösen Wärmedämmplatte der Zusammensetzung

62,5 Gew.-%  pyrogen erzeugte Kieselsäure
31,7 Gew.-%  Ilmenit
5,0 Gew.-%  Aluminiumsilikatfaser
0,8 Gew.-%  Borcarbid

fest umhüllt. Die Platte war in eine 40 $\mu$m dicke Aluminiumfolie unter einem Unterdruck von $10^{-1}$ bar (abs.) eingeschweißt.

Um diese Anordnung wurde ein weiteres hitzebeständiges Metallrohr gestellt, so daß der lichte Zwischenraum zwischen Dämmung und äußerem Rohr 4 mm betrug. Nach Beheizen des Außenmantels des äußeren Metallrohres auf 500 °C wurde der Zwischenraum mit flüssigem Aluminium ausgegossen. Nach dem Erkalten wurde das äußere Rohr entfernt und das innerere Rohr auf 950 °C erwärmt. An den Verbindungsstellen von Aluminium und Metallrohr entstand ein winziger Spalt der bis zu einer Dicke von 300 $\mu$m anwuchs und dann unverändert blieb.

4

Ein Schnitt durch die Dämmanordnung zeigte den Dämmstoff in der Struktur unverändert. Die Dämmdicke lag unverändert bei 5 mm.

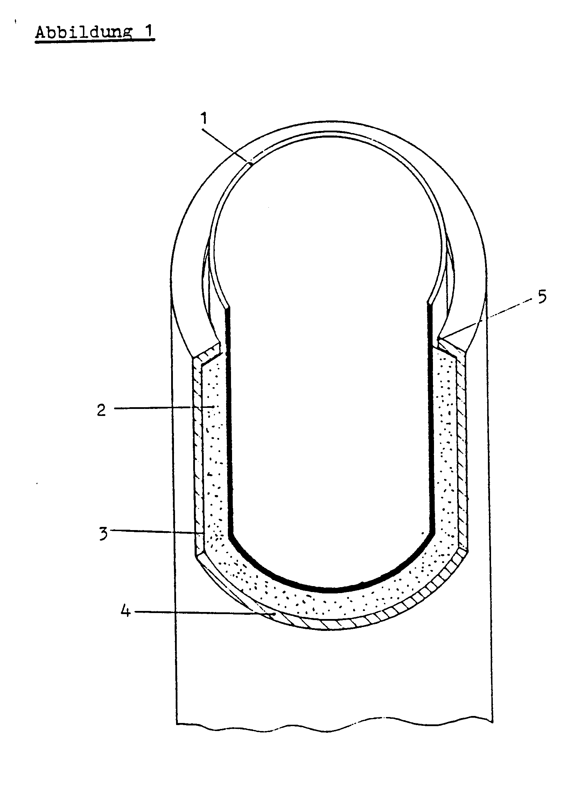

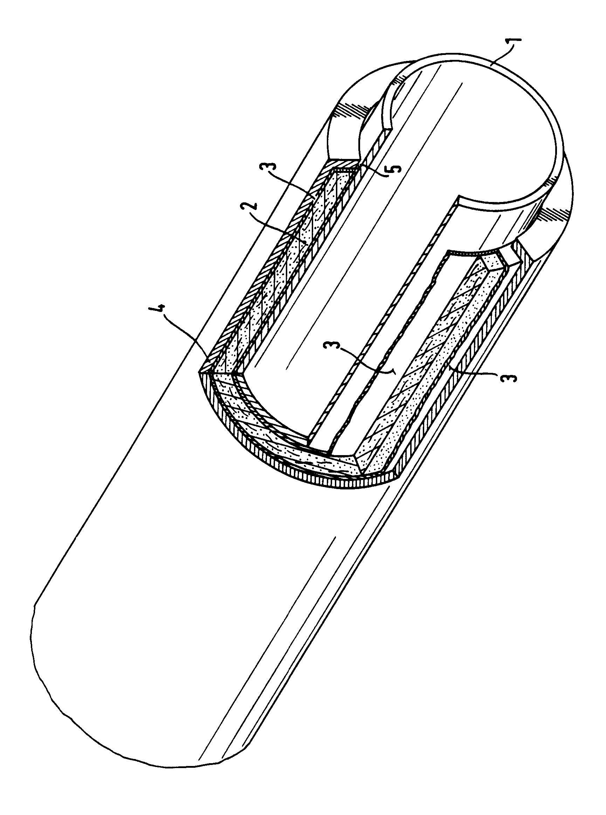

Der gemäß dem Beispiel erhaltene Wärmedämmformkörper, der zur Dämmung des inneren Stahlrohres dient, ist in Abbildung 1 dargestellt. Darin bedeuten:

1 zu dämmendes Stahlrohr
2 Wärmedämmstoff
3 Aluminiumfolie
4 Aluminiumumhüllung
5 Spalt

Dieser Spalt (5) hat für gewisse Anwendungen im Motorenbereich wie zum Beispiel bei Krümmern eine entscheidende Bedeutung. Werden Blechkrümmer gedämmt, muß für Innen- und Außenschale ein Bewegungsausgleich ermöglicht werden. Bisher wurde dies durch eine tragende Außenschale gelöst, an die die Innenschale im Bereich der Eingangsstutzen geschweißt wurde. So konnte die Innenschale wenigstens in vertikaler Richtung die thermische Ausdehnung kompensieren. Nachteilig bei diesem System ist, daß der Dämmstoff durch die Bewegungen in Mitleidenschaft gezogen wird. Bei der gemäß dem Beispiel erhaltenen Dämmanordnung - tragendes Rohr, Dämmung, gegossene Aluminiumaußenschale - entsteht bei der ersten Temperierung des Rohres ein winziger Spalt mit 300 $\mu$ m zwischen Aluminiumhaut und Krümmer. Dadurch kann sich das Rohr nun in axialer Richtung ausdehnen, in einer Bewegungsrichtung, die die Dämmung bedeutend weniger beansprucht. Die Dämmung umhüllt das Rohr schwingend.

Beispiel 2:

Ein Stahlrohr der Abmessungen gemäß Beispiel 1 wurde mit einer 5 mm dicken, verpreßten, mikroporösen Wärmedämmplatte der Zusammensetzung

65,1 Gew.-%     pyrogen erzeugtes Aluminiumoxid
30,2 Gew.-%     Zirkonsilikat
4,7 Gew.-%      Aluminiumsilikatfaser

fest umhüllt.

Eine 40 $\mu$ m starke Edelstahlfolie diente zur äußeren mechanischen Stabilisierung des Wärmedämmstoffes, indem die Folie enganliegend um das mit der Dämmung umgebene Rohr gewickelt wurde. Die Anordnung wurde nun in eine zylinderförmige Sandform gestellt. Der lichte Spalt zwischen Edelstahlfolie und Sandwand betrug 5 mm. Dieser Raum wurde mit Fe Mn 75 C7 (eine Eisenmanganlegierung mit 75-80 Gew.-% Mangan und 6-8 Gew.-% Kohlenstoff) ausgegossen. Nach Erkalten wurde die Umhüllung geöffnet. Der Dämmstoff lag unverändert vor.

**Patentansprüche**

1.  Wärmedämmformkörper auf der Basis von mikroporösem, verpreßtem Wärmedämmstoff mit einer zumindest einseitigen Umhüllung auf der Basis von Metallen erhältlich durch Aufbringen von Metallen oder Metallegierungen in flüssigem Zustand auf einen Grundkörper auf Basis von mikroporösem, verpreßtem Wärmedämmstoff.

2.  Wärmedämmformkörper nach Anspruch 1, dadurch gekennzeichnet, daß der mikroporöse Wärmedämmstoff verpreßtes, feinteiliges Metalloxid enthält.

3.  Wärmedämmformkörper nach Anspruch 1 oder 2, dadurch gekennzeichnet, daß der Wärmedämmstoff
    30 - 100 Gew.-%     feinteiliges Metalloxid
    0 - 50 Gew.-%       Trübungsmittel
    0 - 50 Gew.-%       Fasermaterial und
    0 - 15 Gew.-%       anorganisches Bindenmaterial enthält, wobei die Summe der vier Komponenten inner 100 Gew.-% ergeben muß.

4.  Wärmedämmformkörper nach einem oder mehreren der Ansprüche 1 bis 3, dadurch gekennzeichnet, daß das feinteilige Metalloxid aus pyrogen erzeugter Kieselsäure, pyrogen erzeugtem Aluminiumoxid oder deren Mischung besteht.

5.  Wärmedämmformkörper nach einem oder mehreren der Ansprüche 1 bis 4, dadurch gekennzeichnet, daß

5

EP 0 342 661 B1

die in flüssigem Zustand aufgebrachten Metalle oder Metallegierungen einen Schmelzpunkt von 300 bis 1500°C aufweisen.

6. Verfahren zur Herstellung von Wärmedämmformkörpern nach einem oder mehreren der Ansprüche 1 bis 5, dadurch gekennzeichnet, daß Metalle oder Metallegierungen in flüssigem Zustand auf einen Grundkörper auf Basis von mikroporösem, verpreßtem Wärmedämmstoff aufgebracht werden.

7. Verfahren nach Anspruch 6, dadurch gekennzeichnet, daß der Grundkörper mit einer Kokille umgeben wird und der Abstand zwischen Kokilleninnenwand und Grundkörper der zu erzielenden Stärke der Metallumhüllung entspricht.

## Claims

1. Heat insulating moulding based on microporous, pressmoulded heat insulation material with a sheathing at least on one side based on metals, and which can be produced by applying metals or metal alloys in the liquid state to a substrate based on microporous, pressmoulded heat insulation material.

2. Heat insulating moulding according to Claim 1, characterised in that the microporous heat insulation material contains pressmoulded, finely dispersed metal oxide.

3. Heat insulating moulding according to Claim 1 or 2, characterised in that the heat insulation material contains

| | |
|---|---|
| 30 - 100% | by weight of finely dispersed metal oxide |
| 0 - 50% | by weight of opacifier |
| 0 - 50% | by weight of fibrous material and |
| 0 - 15% | by weight of inorganic binder, the sum of the four components always having to add up to 100% by weight. |

4. Heat insulating moulding according to one or more of Claims 1 to 3, characterised in that the finely dispersed metal oxide consists of pyrogenically produced silicic acid, pyrogenically produced aluminium oxide or a mixture of these.

5. Heat insulating moulding according to one or more of Claims 1 to 4, characterised in that the metals or metal alloys which are applied in the liquid state have a melting point of 300 to 1500°C.

6. Process for the production of heat insulating mouldings according to one or more of Claims 1 to 5, characterised in that metals or metal alloys are applied in the liquid state to a substrate based on microporous, pressmoulded heat insulation material.

7. Process according to Claim 6, characterised in that the substrate is surrounded by a die casting mould and the distance between the inner wall of the die casting mould and the substrate corresponds to the thickness of the metal sheathing which is to be achieved.

## Revendications

1. Corps façonné pour isolation thermique, à base d'un matériau microporeux comprimé pour isolation thermique, qui comporte, d'un côté au moins, une enveloppe à base de métaux que l'on peut obtenir en appliquant les métaux ou des alliages de métaux à l'état liquide sur un corps de base, à base d'un matériau microporeux comprimé pour isolation thermique.

2. Corps façonné pour isolation thermique selon la revendication 1, caractérisé en ce que le matériau microporeux pour isolation thermique contient de l'oxyde de métal comprimé en fines particules.

3. Corps façonné pour isolation thermique selon la revendication 1 ou 2, caractérisé en ce que le matériau pour isolation thermique contient :

30 à 100 %    en poids d'un oxyde de métal en fines particules,

0 à 50 %   en poids d'un opacifiant,

0 à 50 %   en poids d'une matière fibreuse,

0 à 15 %   en poids d'un liant minéral, la somme des quatre constituants donnant toujours 100 % en poids.

4. Corps façonné pour isolation thermique selon une ou plusieurs des revendications 1 à 3, caractérisé en ce que l'oxyde de métal finement divisé consiste en de l'acide silicique obtenu par pyrogénation, en de l'oxyde d'aluminium obtenu par pyrogénation ou en leur mélange.

5. Corps façonné pour isolation thermique selon une ou plusieurs des revendications 1 à 4, caractérisé en ce que les métaux ou alliages de métaux, appliqués à l'état liquide, présentent un point de fusion de 300 à 1500 °C.

6. Procédé pour produire des objets ou corps façonnés pour isolation thermique selon une ou plusieurs des revendications 1 à 5, caractérisé en ce que l'on applique des métaux ou alliages de métaux, à l'état liquide, sur un corps de base à base d'un matériau microporeux comprimé pour isolation thermique.

7. Procédé selon la revendication 6, caractérisé en ce que le corps de base est entouré d'une coquille , et en ce que la distance entre la paroi intérieure de la coquille et le corps de base correspond à l'épaisseur de l'enveloppe de métal à obtenir.

Abbildung 1